(19) Europäisches Patentamt
European Patent Office
Office européen des brevets

(11) **EP 3 386 085 B1**

(12) **EUROPEAN PATENT SPECIFICATION**

(45) Date of publication and mention
of the grant of the patent:
**30.09.2020   Bulletin 2020/40**

(51) Int Cl.:
*H02M 1/12* *(2006.01)*          *H02M 7/493* *(2007.01)*
*H02M 7/49* *(2007.01)*          *H02J 3/18* *(2006.01)*
*H02P 27/08* *(2006.01)*        *H02P 27/14* *(2006.01)*
*H02M 7/483* *(2007.01)*        *H02M 1/00* *(2006.01)*
*H02M 7/08* *(2006.01)*          *H02M 7/487* *(2007.01)*
*H01F 30/02* *(2006.01)*

(21) Application number: **18162749.8**

(22) Date of filing: **20.03.2018**

(54) **ELECTRICAL SYSTEM**

**ELEKTRISCHES SYSTEM**

**SYSTÈME ÉLECTRIQUE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **07.04.2017   GB 201705629**

(43) Date of publication of application:
**10.10.2018   Bulletin 2018/41**

(73) Proprietor: **Rolls-Royce plc
London N1 9FX (GB)**

(72) Inventors:
• **Liu, Xiong
Derby, Derbyshire DE24 8BJ (GB)**
• **Gupta, Amit
Derby, Derbyshire DE24 8BJ (GB)**
• **Lai, Jih-Sheng
Derby, Derbyshire DE24 8BJ (GB)**

(74) Representative: **Rolls-Royce plc
Intellectual Property Dept SinA-48
PO Box 31
Derby DE24 8BJ (GB)**

(56) References cited:
**CN-A- 103 997 273      CN-A- 104 852 657
CN-A- 105 870 960      US-A1- 2014 139 168
US-B1- 6 198 647      US-B1- 6 262 906**

• **Remus Teodorescu ET AL:
"Proportional-Resonant Controllers. A New
Breed of Controllers Suitable for Grid-Connected
Voltage-Source Converters", The 9th
International Conference on Optimization of
Electrical and Electronic Equipments, Optim
2004 - Brasov, Romania, vol. 3, 1 January 2004
(2004-01-01), pages 9-14, XP055609400, ISBN:
978-973-635-288-1**

EP 3 386 085 B1

## Description

Field of the Invention

The present invention relates to an electrical system, and particularly to an electrical system for use in an electrical drive for a marine vessel.

Background

There is an increasing trend of medium voltage propulsion systems for large vessels and offshore platform rigs, which have a total electrical capacity of more than 10 MW. However, to achieve high voltage operation, multilevel inverters are required.

There are a number of known topologies for multilevel inverters, such as: neutral point clamped (NPC) inverters, flying capacitor inverters, and cascaded multilevel inverters. For voltage levels higher than 3.3 kV, the circuits for implementing both NPC and flying capacitor inverters become increasingly complex. For example, the split DC capacitors' voltage balance control becomes more challenging. As an alternative, two three-level NPC inverters can supply the open stator winding machine with a voltage rating of up to 6.6 kV. As a further alternative, a cascaded H-Bridge (CHB) multilevel converter or modular multi-level converter can be used since the voltage level for those topologies can be increased easily by cascading more cells.

In general, these topologies, all require a front-end AC/DC rectifier and a rear-end DC/AC inverter. For example, the front end can conventionally be provided by multi-pulse diode rectifiers.

It would be desirable to reduce the overall size and weight of such electrical systems, whilst maintaining the same degree of useful capacity.

US6262906 relates to an air-cooled power converter with gate turn-off power semiconductors, is described in which the cooling capacity is such that the temperature of the gate turn-off power semiconductor does not exceed a critical temperature limit, the power converter having optimized heat sinks, at least some of which are thermally connected in parallel, and the power converter is designed to operate at a continuous load of 1 to 20 megawatts, preferably of 2 to 10 megawatts.

US2014139168 relates to a multiple phase electrical system, including: a first and a second electrical lane, each lane having a generator and a load connected by a bus system, and a rectifier between the generator and load; and, a transformer connected between the two lanes, the transformer having a plurality of power windings across each of which corresponding phases of the first and second lanes are connected, and a plurality of phase shift windings.

CN103997273 relates to a proportion resonance control based method for inhibiting zero sequence currents of a common bus winding permanent magnetic motor. The method is based on a permanent magnetic motor in a winding structure, employs a common DC source structure, and realizes the purpose of inhibiting the zero sequence currents through the design of a proportion resonance controller.

CN104852657 relates to a control method for suppressing current zero-crossing fluctuation of a bus-shared single-side controllable open-winding permanent-magnet motor system. The motor system employs a common-direct-current power supply structure.

CN105870960 relates to a control method for a single-phase grid-connected inverter and a control parameter obtaining method.

Summary

Accordingly, in a first aspect, the invention provides an electrical system according to claim 1.

Advantageously, splitting the AC supply in two and using the phase-shifting transformer between the supplies and the rectifier circuits enables good sinusoidal input current waveforms to be achieved through harmonic cancellation of the -5$^{th}$ and +7$^{th}$ orders, and suppression to zero, or as near to zero as possible, of the zero sequence circulation current. Thus the front end efficiency of the system can be increased, allowing a transformer to be used which has a relatively low capacity relative to the total electrical capacity of the system.

In a second aspect, the invention provides a marine propulsion system including an electric drive powered by the electrical system of the first aspect.

Optional features of the invention will now be set out. These are applicable singly or in any combination with any aspect of the invention.

A resonant frequency $3\omega_i$ of the resonant controller may be set by arranging its transfer function $H_3(s)$ according to the equation

$$H_3(s) = \frac{k_r s}{s^2 + 2\omega_c s + (3\omega_i)^2},$$

where $k_r$ is the resonance coefficient, $s$ is the Laplacian operator, $2\omega_c$ is the bandwidth of the controller, and $\omega_i$ is the grid angular frequency. The controller bandwidth can be varied as appropriate, e.g. for reducing sensitivity to grid frequency variation.

The system may include a first set of inductors and second set of inductors, disposed in series between the phase-shifting transformer and the first three-phase AC supply and second three-phase AC supply respectively.

The system may further include a first set of capacitors disposed in parallel between the first rectifier and first inverter, and a second set of capacitors disposed in parallel between the second rectifier and the second inverter.

The first inverter circuit and/or the second inverter circuit may be any one of: a two-level voltage source inverter circuit, an NPC topology inverter circuit (having e.g. a standard NPC topology or an active NPC topology); and a flying capacitor multilevel converter circuit. A two-level voltage source inverter circuit may be implemented in a 6-switch topology, for example based on IGBTs. An NPC topology inverter circuit may be implemented in a 12-switch topology.

Brief Description of the Drawings

Embodiments of the invention will now be described by way of example with reference to the accompanying drawings in which:

Figure 1 shows a schematic view of an electrical system;

Figure 2 shows the schematic view of the electrical system of Figure 1, as well as a circulation current;

Figure 3 shows a polygon representation of the transformer in Figure 1;

Figure 4 shows a control system for the electrical system of Figure 1; and

Figure 5 shows a schematic of a marine propulsion drive including an electrical system.

Detailed Description and Further Optional Features

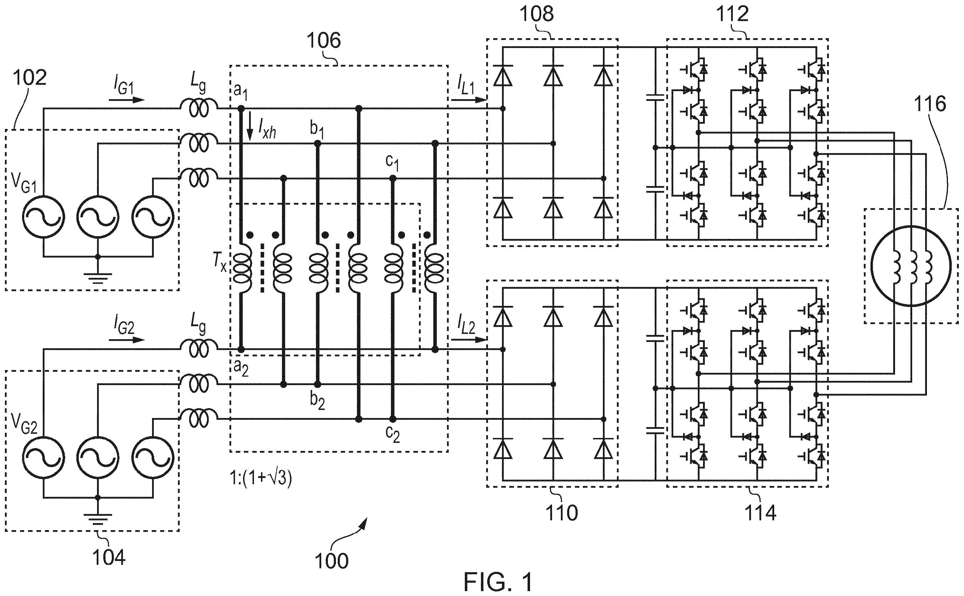

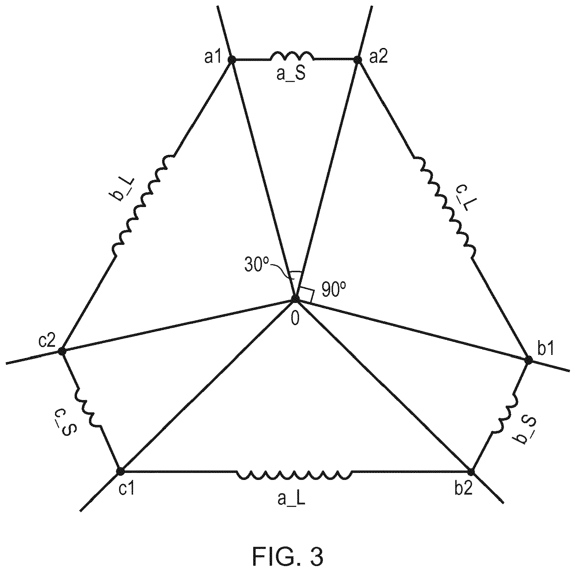

With reference to Figure 1, an electrical system which is an example of the invention is generally indicated by reference 100. The system includes a first AC power supply 102, which supplies AC power with three phases and current $I_{G1}$. There is also a second AC power supply 104, which also supplies AC power with three phases and current $I_{G2}$. The first and second AC power supplies are connected to respective arms of a phase-shifting transformer 106. The operation of this phase-shifting transformer is discussed in detail with relation to Figure 3, however it applies a 30° phase shift to the AC currents it transforms. After the phase-shifting transformer, currents $I_{L1}$ and $I_{L2}$ flow into a first rectifier circuit 108 and a second rectifier circuit 110 respectively.

Each of the first and second rectifier circuits is formed of six diodes, and functions to rectify its respectively received multi-phase AC power into a DC supply. The DC supplies are provided to a first inverter circuit 112 and a second inverter circuit 114 respectively. Capacitors may be placed in parallel between each rectifier-inverter pair to smooth the DC supply voltage. Each of the first and second inverter circuits is formed of three branches of IGBT controlled switches and companion diodes. The switches are operated so as to transform the received DC voltage into three-phase AC voltage. Each inverter then provides its three-phase AC current to a load 116, e.g. an open stator winding machine (i.e. an electrical machine having a stator whose phase windings are open-circuited). The system beyond the phase-shifting transformer towards the load may be described as comprising two three-level neutral point clamped (3LNPC) inverters.

A system 100 as shown above can drive a machine with voltages on the order of 4.16 kV and 6.6 kV. Moreover, the system can be operated at a lower switching frequency than a conventional 3LNPC inverter, which helps to reduce stator current ripples.

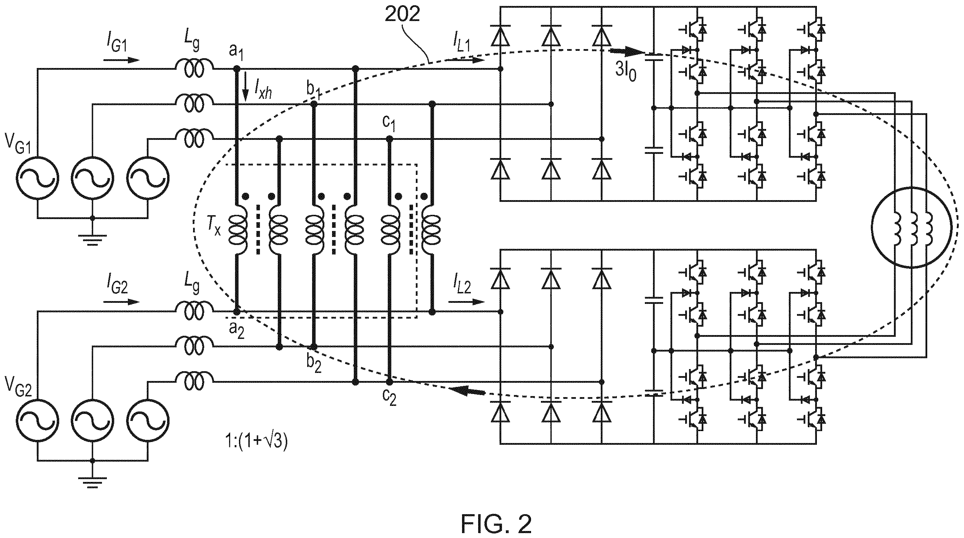

Shown in Figure 2 is the same electrical system of Figure 1. However, a circulation current 202 is indicated which may flow in clock-wise direction through the circuit. This circulation current may be the result of a third order zero sequence current path, flowing through the system. Moreover, it can affect the circuit harmonic cancellation capability, and therefore allow -5th and +7th order harmonic currents to flow through the AC power supply. If this is not accounted for, the transformer may be of insufficient capacity and the AC power supply current waveform quality may be degraded.

Accordingly, the phase-shifting transformer 106 operates to cancel these harmonic currents. In particular, as shown in Figure 3, the phase-shifting transformer can be a polygonal phase-shifter autotransformer, as described in US 2014/0139168. Short power winding a_S and long phase shift winding a_L of the transformer take a first phase a of the respective AC power supply. Corresponding short power windings b_S, c_S and long phase shift windings b_L, c_L take the second b and third c phases respectively. To achieve a 30° phase shift, the turns ratio on the power windings to phase shift windings is 1/2.732 or 1:(1+√3). This allows the lower order -5th and +7th harmonic currents in the diode rectifiers to be cancelled.

To further ensure that the circulation current 202 is reduced to as near to zero as possible, a resonant controller (not shown) may be added. The resonant frequency $3\omega_i$ of the resonant controller is set to three times the grid frequency $\omega_i$. In particular, the resonant controller can be set by adjusting its transfer function $H_3(s)$ according to the equation:

$$H_3(s) = \frac{k_r s}{s^2 + 2\omega_c s + (3\omega_i)^2}$$

where $k_r$ is the resonance coefficient, $s$ is the Laplacian operator, $2\omega_c$ is the bandwidth of the controller, and $\omega_i$ is the grid angular frequency. Thus the controller frequency can deviate by $\pm\omega_c$ around the resonant frequency $3\omega_i$ with 3dB amplitude decrease. However, the controller bandwidth can be varied as appropriate, which can be helpful for reducing sensitivity to grid frequency variation.

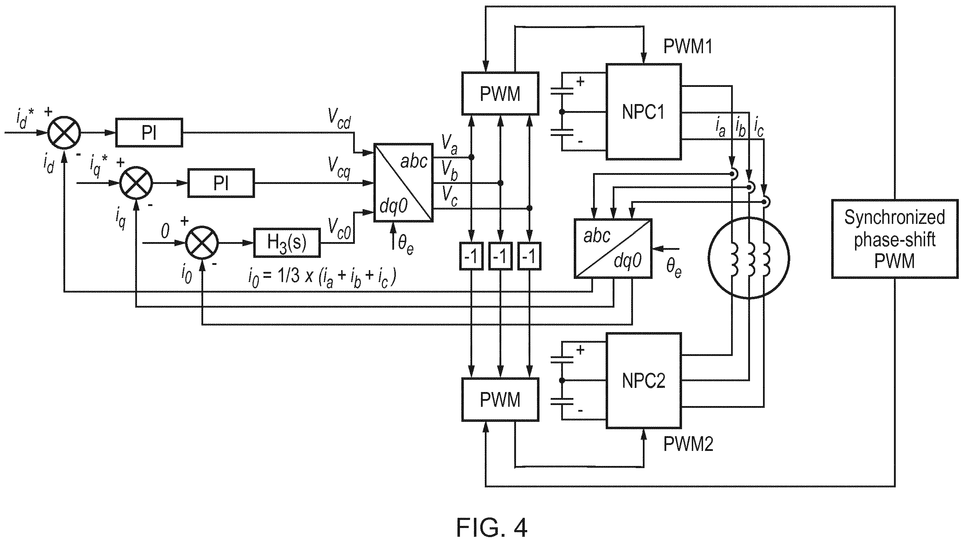

To implement this, a control system as shown in Figure 4 may be utilized where any three-phase type machine, e.g. an induction machine, a permanent magnet (PM) synchronous machine, a brush-less synchronous machine etc., is the load 116 of the electrical system. For an induction motor drive, the d-axis and q-axis current references $i_d^*$ and $i_q^*$ can be obtained from the flux control output and speed control output respectively. For a surface-mounted permanent magnet control, d-axis current references $i_d^*$ are generally set to zero unless field weakening is required. For interior PM machine control, $i_d^*$ and $i_q^*$ can be allocated by the controller to achieve maximum torque per ampere (MTPA).

The angle $\theta_e$ for abc/dq and dq/abc transformation is synchronous speed angle, which is rotor position angle multiplied by the pole pairs for a PM machine. Slip speed must be considered for induction machine synchronous speed angle calculations.

Compared with conventional motor drive control systems using dq axis models, zero sequence current control loops can be added to the control system when the electrical system providing power to the load includes a polygon phase-shifter autotransformer passive front end. Through this control, the modulation references $v_a$, $v_b$, and $v_c$ are non-sinusoidal, but the machine stator currents $i_a$, $i_b$, and $i_c$ are three-phase balanced sinusoidal. The modulation references for inverter circuits 112 and 114 are set opposite to each other in order to maximise the machine stator winding voltage for each phase, thus better utilizing the DC bus voltage. The pulse width modulation (PWM) signals for the two inverter circuits can be synchronized. In order to reduce the stator current switching ripple, carriers for generating PWM of the two inverter circuits can be 90° phase shifted.

Further suitable control systems are described in An Optimized Control Method based on Dual Three-Level Inverters for Open-end Winding Induction Motor Drives (Wu et al.) published in the Journal of Power Electronics, Vol. 14, No. 2, pp. 315-323, March 2015 and *PWM methods providing phase voltage symmetry of dual-inverter fed drives: Systems modelling and simulation* (Valentin Oleshuk) published in PRZEGLĄD ELEKTROTECHNICZNY, ISSN 0033-2097, R.89 NR 6/2013.

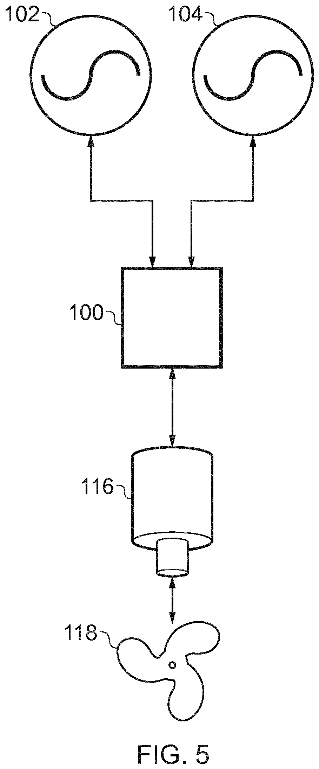

Figure 5 is a schematic of a marine propulsion drive including an electrical system 100 as discussed above. The first 102 and second 104 AC power supplies are connected to the electrical system. When acting as an AC/AC converter, the electrical system receives the three-phase AC supply as an input and outputs an AC supply to the load 116 e.g. in the form of an electric motor. This motor is connected in turn to a drive 118, e.g. a propeller. The electrical system 100 controls the output waveform of the AC supply so as to enable the electric motor to perform in the desired manner.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Variations and modifications are possible within the scope of the appended claims.

**Claims**

1. An electrical system (100) including:

   a first three-phase AC supply (102) and a second three-phase AC supply (104);
   a phase-shifting transformer (106), connected to and configured to receive AC power from each of the first three-phase AC supply and the second three-phase AC supply, said phase-shifting transformer applying a 30° phase shift to each of the received AC powers to thereby generate a first transformed AC current and a second transformed AC current;
   a first rectifier circuit (108) and a second rectifier circuit (110), each connected to the phase-shifting transformer and configured to receive the first transformed AC current and the second transformed AC current respectively, said rectifier circuits generating a first DC voltage and a second DC voltage;
   a first inverter circuit (112) and a second inverter circuit (114), respectively connected to the first rectifier circuit and the second rectifier circuit, said inverter circuits generating a first AC output voltage and a second AC output voltage from the first DC voltage and second DC voltage respectively; and
   a load (116), connected to and configured to receive the first AC output voltage and the second AC output voltage, wherein the load is an open stator winding motor drive; a control subsystem, said control subsystem operating to reduce or cancel circulation current within the electrical system, wherein the control subsystem is a resonant controller and wherein the resonant frequency 3ωi of the resonant controller is set to three times the grid frequency ωi, **characterised in that**:

   the phase-shifting transformer (106) is a polygonal phase-shifter autotransformer; and the control subsystem is configured to produce non-sinusoidal modulation references ($v_a$, $v_b$, $v_c$) for controlling the first inverter circuit and the second inverter circuit, thereby producing three-phase balanced sinusoidal machine stator currents ($i_a$, $i_b$, $i_c$), and wherein the modulation references for the first inverter circuit (112) and the second inverter circuit (114) are set opposite to each other in order to maximise the machine stator winding voltage for each phase, thus better utilizing the DC bus voltage.

2. The electrical system of claim 1, wherein a transfer function $H_3(s)$ of the resonant controller is given by the equation:

$$H_3(s) = \frac{k_r s}{s^2 + 2\omega_c s + (3\omega_i)^2}$$

where $2\omega_c$ is the adjustable bandwidth of the resonant controller, $k_r$ is the resonance coefficient, $s$ is the Laplacian operator, and $\omega_i$ is the grid frequency.

3. The electrical system of any preceding claim, further including a first set of inductors and a second set of inductors, disposed in series between the phase-shifting transformer and the first three-phase AC supply and second three-phase AC supply respectively.

4. The electrical system of any preceding claim, further including a first set of capacitors disposed in parallel between the first rectifier and first inverter, and a second set of capacitors disposed in parallel between the second rectifier and second inverter respectively.

5. The electrical system of any preceding claim, wherein the first inverter circuit and/or the second inverter circuit is any one of:

     a two-level voltage source inverter circuit,
     a neutral point clamped topology inverter circuit; and
     a flying capacitor multilevel converter circuit.

6. A marine propulsion system including an electric drive powered by the electrical system of any preceding claim.

**Patentansprüche**

1. Elektrisches System (100), mit:

     einer ersten dreiphasigen Wechselstromversorgung (102) und einer zweiten dreiphasigen Wechselstromversorgung (104);
     einem Phasenverschiebungstransformator (106), der mit jeder der ersten dreiphasigen Wechselstromversorgung und der zweiten dreiphasigen Wechselstromversorgung verbunden und so gestaltet ist, dass er von diesen jeweils Wechselstromleistung empfängt, wobei der Phasenverschiebungstransformator auf jede der empfangenen Wechselstromleistungen eine Phasenverschiebung um 30° anwendet, um dadurch einen ersten transformierten Wechselstrom und einen zweiten transformierten Wechselstrom zu erzeugen;
eine erste Gleichrichterschaltung (108) und eine zweite Gleichrichterschaltung (110), die jeweils mit dem Phasenverschiebungstransformator verbunden und so gestaltet sind, dass sie entsprechend den ersten transformierten Wechselstrom und den zweiten transformierten Wechselstrom empfangen, wobei die Gleichrichterschaltungen eine erste Gleichstromspannung und eine zweite Gleichstromspannung erzeugen;
eine erste Wechselrichterschaltung (112) und eine zweite Wechselrichterschaltung (114), die entsprechend mit der ersten Gleichrichterschaltung und der zweiten Gleichrichterschaltung verbunden sind, wobei die Wechselrichterschaltungen entsprechend aus der ersten Gleichstromspannung und der zweiten Gleichstromspannung eine erste Wechselstromausgangsspannung und eine zweite Wechselstromausgangsspannung erzeugen; und
eine Last (116), die mit der ersten Wechselstromausgangsspannung und der zweiten Wechselstromausgangsspannung verbunden und für den Empfang dieser Spannungen gestaltet ist, wobei die Last ein motorischer Antrieb für eine offene Statorwicklung ist; ein Steuerteilsystem, wobei das Steuerteilsystem so arbeitet, dass es Zirkulationsstrom in dem elektrischen System reduziert oder aufhebt, wobei das Steuerteilsystem eine Resonanzsteuereinheit ist, und wobei die Resonanzfrequenz $3\omega i$ der Resonanzsteuereinheit auf den dreifachen Wert der Gitterfrequenz $\omega i$ eingestellt ist, **dadurch gekennzeichnet, dass**:

     der Phasenverschiebungstransformator (106) ein polygonaler Phasenverschiebungsautotransformator ist; und
     das Steuerteilsystem so gestaltet ist, dass es nicht sinusförmige Modulationsreferenzen ($v_a$, $v_b$, $v_c$) zur Steuerung der ersten Wechselrichterschaltung und der zweiten Wechselrichterschaltung erzeugt, wodurch dreiphasige, ausgeglichene, sinusförmige Statorströme ($i_a$, $i_b$, $i_c$) erzeugt werden, und wobei die Modulationsreferenzen für die erste Wechselrichterschaltung (112) und die zweite Wechselrichterschaltung (114) zueinander entgegengesetzt eingestellt sind, um die Statorwicklungsspannung der Maschine für jede Phase zu maximieren, wodurch die Gleichstrombusspannung besser genutzt wird.

2. Elektrisches System nach Anspruch 1, wobei eine Übertragungsfunktion $H_3(s)$ der Resonanzsteuer-

schaltung durch folgende Gleichung gegeben ist:

$$H_3(s) = \frac{k_r s}{s^2 + 2\omega_c s + (3\omega_i)^2}$$

wobei $2\omega_c$ die anpassbare Bandbreite der Resonanzsteuereinheit ist, wobei $k_r$ der Resonanzkoeffizient ist, wobei $s$ der Laplace-Operator ist, und wobei $\omega_i$ die Gitterfrequenz ist.

3. Elektrisches System nach einem der vorstehenden Ansprüche, das ferner eine erste Gruppe von Induktoren und eine zweite Gruppe von Induktoren aufweist, die in Reihe entsprechend zwischen dem Phasenverschiebungstransformator und der ersten dreiphasigen Wechselstromversorgung und der zweiten dreiphasigen Wechselstromversorgung angeordnet sind.

4. Elektrisches System nach einem der vorstehenden Ansprüche, das ferner eine erste Gruppe von Kondensatoren aufweist, die parallel zwischen dem ersten Gleichrichter und dem ersten Inverter angeordnet sind, und eine zweite Gruppe von Kondensatoren, die entsprechend zwischen dem zweiten Gleichrichter und dem zweiten Inverter angeordnet sind.

5. Elektrisches System nach einem der vorstehenden Ansprüche, wobei die erste Wechselrichterschaltung und/oder die zweite Wechselrichterschaltung beliebig eines der folgenden ist/sind:

   eine Zweipunkt-Spannungsquellenumkehrschaltung;
   eine Umkehrschaltung mit neutralpunktgeklemmter Topologie; und
   eine mehrstufige Umkehrschaltung mit fliegenden Kapazitäten.

6. Schiffsantriebssystem, das einen elektrischen Antrieb aufweist, der durch das elektrische System nach einem der vorstehenden Ansprüche betrieben wird.

**Revendications**

1. Système électrique (100) comprenant :

   une première alimentation CA triphasée (102) et une seconde alimentation CA triphasée (104) ;
   un transformateur déphaseur (106), connecté et conçu pour recevoir une alimentation CA de chacune de la première alimentation CA triphasée et de la seconde alimentation CA, ledit transformateur déphaseur appliquant un déphasage de 30° à chacune des alimentations CA reçues pour générer ainsi un premier CA transformé et un second CA transformé ;
un premier circuit redresseur (108) et un second circuit redresseur (110), chacun étant connecté au transformateur déphaseur et conçu pour recevoir respectivement le premier CA transformé et le second CA transformé, lesdits circuits redresseurs générant une première tension CC et une seconde tension CC ;
un premier circuit onduleur (112) et un second circuit onduleur (114), respectivement connectés au premier circuit redresseur et au second circuit redresseur, lesdits circuits onduleurs générant une première tension de sortie CA et une seconde tension de sortie CA provenant de la première tension CC et de la seconde tension CC respectivement ; et
une charge (116), connectée à et conçue pour recevoir la première tension de sortie CA et la seconde tension de sortie CA, la charge étant un entraînement de moteur à enroulement statorique ouvert ; un sous-système de commande, ledit sous-système de commande fonctionnant pour réduire ou annuler le courant de circulation dans le système électrique, le sous-système de commande étant un dispositif de commande résonant et la fréquence de résonance 3ωi du dispositif de commande résonant étant réglée à trois fois la fréquence du réseau ωi, **caractérisé en ce que** :

   le transformateur déphaseur (106) est un autotransformateur déphaseur polygonal ; et
   le sous-système de commande est conçu pour produire des références de modulation non sinusoïdales ($v_a$, $v_b$, $v_c$) pour commander le premier circuit onduleur et le second circuit onduleur, produisant ainsi des courants de stator de machine sinusoïdaux équilibrés triphasés ($i_a$, $i_b$, $i_c$), et les références de modulation pour le premier circuit onduleur (112) et le second circuit onduleur (114) étant placées en opposition l'une de l'autre afin de maximiser la tension d'enroulement de stator de machine pour chaque phase, utilisant ainsi mieux la tension de bus CC.

2. Système électrique selon la revendication 1, une fonction de transfert $H_3(s)$ du dispositif de commande de résonance étant donnée par l'équation :

$$H_3(s) = \frac{k_r s}{s^2 + 2\omega_c s + (3\omega_i)^2}$$

où $2\omega_c$ est la largeur de bande réglable du dispositif de commande de résonance, $k_r$ est le coefficient de résonance, $s$ est l'opérateur laplacien et $\omega_i$ est la fréquence de grille.

3. Système électrique selon l'une quelconque des revendications précédentes, comprenant en outre un premier ensemble d'inducteurs et un second ensemble d'inducteurs, disposés en série entre le transformateur déphaseur et la première alimentation CA triphasée et la seconde alimentation CA triphasée, respectivement.

4. Système électrique selon l'une quelconque des revendications précédentes, comprenant en outre un premier ensemble de condensateurs disposés en parallèle entre le premier redresseur et le premier onduleur, et un second ensemble de condensateurs disposés en parallèle entre le second redresseur et le second onduleur respectivement.

5. Système électrique selon l'une quelconque des revendications précédentes, le premier circuit onduleur et/ou le second circuit onduleur étant :

   un circuit onduleur de source de tension à deux niveaux,
   un circuit onduleur à topologie à point neutre et à verrouillage ; ou
   un circuit convertisseur multiniveau à condensateur volant.

6. Système de propulsion marine comprenant un entraînement électrique alimenté par le système électrique selon l'une quelconque des revendications précédentes.

FIG. 1

EP 3 386 085 B1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6262906 B
- US 2014139168 A
- CN 103997273
- CN 104852657
- CN 105870960
- US 20140139168 A

### Non-patent literature cited in the description

- **WU et al.** An Optimized Control Method based on Dual Three-Level Inverters for Open-end Winding Induction Motor Drives. *Journal of Power Electronics,* March 2015, vol. 14 (2), 315-323